# EUROPÄISCHE PATENTANMELDUNG

(11) **EP 1 671 857 A1**
(43) Veröffentlichungstag der Anmeldung: **21.06.2006**
(21) Anmeldenummer: 05026830.9
(22) Anmeldetag: 08.12.2005
(51) Int. Cl.: B60R 21/276

(54) **Gassackmodul mit Abströmöffnung**

(30) Priorität: 16.12.2004 DE 202004019445 U
(71) Anmelder: TRW Automotive Safety Systems GmbH, 63743 Aschaffenburg (DE)
(72) Erfinder: Heist, Helga, 63846 Laufach (DE); Kreuzer, Martin, 63839 Kleinwallstadt (DE); Keutz, Markus, 64380 Rossdorf (DE); Lehmann, Michael, 63739 Aschaffenburg (DE); Fellhauer, Joachim, 63741 Nilkheim (DE); Haese, Lutz, 63739 Aschaffenburg (DE); Schneider, Michael, Dr., 63834 Sulzbach (DE); Deckenhoff, Michael, 48249 Dülmen (DE); Helmstetter, Matthias, 63743 Aschaffenburg (DE); Freundenberg, Klaus, 63743 Aschaffenburg (DE); Britz, Thomas, Dr., 63856 Bessenbach (DE); Magoley, Marcus, Dr., 63739 Aschaffenburg (DE)
(74) Vertreter: Strass, Jürgen

(57) **Zusammenfassung**

Ein Gassackmodul für eine Fahrzeuginsassen-Rückhaltevorrichtung hat eine in einem festen Bauteil (10) des Gassackmoduls gebildete Abströmöffnung (12), durch die Gas entweichen kann. Die Abströmöffnung (12) ist von einem flachen Abdeckteil (14) überdeckt. Das Abdeckteil (14) besteht aus dehnbarem Material und weist wenigstens ein Loch (16) auf.

## Beschreibung

Die Erfindung betrifft ein Gassackmodul für eine Fahrzeuginsassen-Rückhaltevorrichtung mit einer in einem festen Bauteil des Gassackmoduls gebildeten Abströmöffnung, durch die Gas entweichen kann.

Grundsätzlich soll bei einem Gassackmodul der Gassack mit dem vom Gasgenerator erzeugten Gas möglichst schnell befüllt werden. In bestimmten Fällen ist es allerdings wünschenswert, die Gasmenge bzw. den Innendruck im Gassack an besondere Bedingungen anzupassen. Zu diesem Zweck können im Gassack selbst oder in festen Bauteilen des Gassackmoduls freigebbare Abströmöffnungen vorgesehen sein.

Aus der US 2004/0 051 285 A1 ist beispielsweise ein Gassackmodul mit Ventilklappen bekannt, die in einem Gasgeneratorträger gebildete Abströmöffnungen verschließen bzw. freigeben können. Die Ventilklappen sind mittels Fangbändern mit einem dem Fahrzeuginsassen zugewandten Teil des Gassackgewebes verbunden. Die Ventilklappen befinden sich bei Aktivierung des Gassackmoduls zunächst in der Öffnungsstellung, so daß Gas entweichen kann. Tritt der sich entfaltende Gassack sehr früh in Kontakt mit dem Fahrzeuginsassen, bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse dagegen in einer Position, die weiter vom Gassackmodul entfernt ist, werden die Abströmöffnungen im Verlauf der weiteren Entfaltung mittels der Fangbänder gegen den Innendruck des Gassacks verschlossen, so daß kein Gas mehr abströmen kann. In der US 2004/0 051 285 A1 ist auch ein anderes Konzept erwähnt, gemäß dem die Ventilklappen zunächst geschlossen sind und sich erst bei zunehmendem Gassackinnendruck öffnen.

Die Erfindung schafft ein Gassackmodul mit einer Abströmöffnung, deren effektiver Querschnitt sich mit einfachen Mitteln selbst reguliert.

Das erfindungsgemäße Gassackmodul für eine Fahrzeuginsassen-Rückhaltevorrichtung umfaßt eine in einem festen Bauteil des Gassackmoduls gebildete Abströmöffnung, durch die Gas abströmen kann, und ist dadurch gekennzeichnet, daß die Abströmöffnung von einem flachen Abdeckteil überdeckt ist, das aus dehnbarem Material besteht und wenigstens ein Loch aufweist.

Das erfindungsgemäß vorgesehene Abdeckteil ermöglicht auf einfache Weise eine automatische Anpassung der abströmenden Gasmenge in Abhängigkeit des im Gassack herrschenden Innendrucks. Das Abdeckteil wird mit zunehmendem Gassackinnendruck stärker gedehnt, wodurch sich automatisch der Querschnitt des Lochs vergrößert. Somit strömt bei höherem Druck mehr Gas durch das Loch, so daß insgesamt mehr Gas durch die Abströmöffnung entweichen kann.

Um sicherzustellen, daß die Abströmöffnung zunächst wenigstens teilweise abgedeckt ist und dadurch ein anfänglicher Gasaustritt weitgehend verhindert wird, sollte das Loch einen kleineren Querschnitt als die Abströmöffnung haben.

Die Vergrößerung des effektiven Abströmquerschnitts durch die "Dehnung" des Lochs im Abdeckteil ist besonders effizient, wenn das Loch im wesentlichen konzentrisch über der Abströmöffnung angeordnet ist.

Zur Vermeidung von zusätzlichen Leckströmen durch die Abströmöffnung ist es vorteilhaft, das Abdeckteil im wesentlichen gasdicht am Rand der Abströmöffnung zu befestigen.

Das Abdeckteil kann insbesondere ein Gewebeteil oder eine Folie sein.

Die Erfindung wird nachfolgend anhand eines Ausführungsbeispiels unter Bezugnahme auf die beigefügten Zeichnungen beschrieben. In den Zeichnungen zeigen:
- Figur 1 einen Ausschnitt eines erfindungsgemäßen Gassackmoduls mit einer Abströmöffnung; und
- Figur 2 den Ausschnitt des Gassackmoduls aus Figur 1 bei hoher Druckbeaufschlagung.

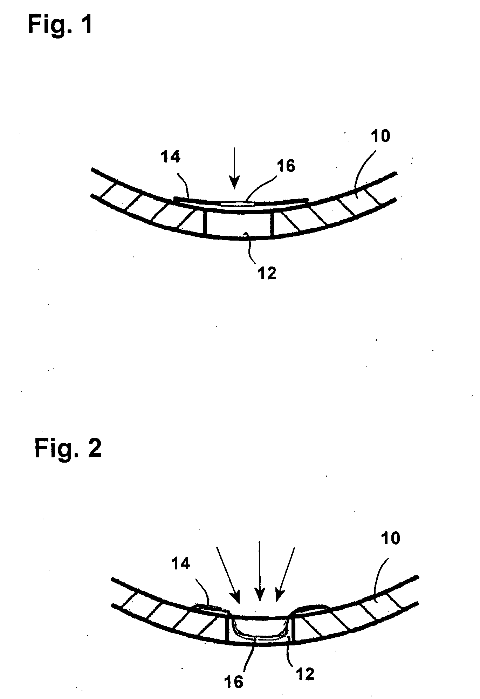

In Figur 1 ist ein festes Bauteil 10 eines Gassackmoduls dargestellt, das z.B. einen Gasgeneratorträger oder eine Wand eines Modulgehäuses sein kann. In dem festen Bauteil 10 ist eine Abströmöffnung 12 gebildet, durch die ein Teil des für die Befüllung des Gassacks des Moduls erzeugten Gases entweichen kann.

Auf der Innenseite des festen Bauteils 10 ist ein flaches Abdeckteil 14 über die Abströmöffnung 12 gespannt, wobei der äußere Rand des Abdeckteils 14 um die Abströmöffnung 12 herum im wesentlichen gasdicht am festen Bauteil 10 befestigt ist. Das Abdeckteil 14 besteht aus einem dehnbaren Material und kann z.B. ein Gewebeteil oder eine Folie sein. In der Mitte des Abdeckteils 14 ist ein Loch 16 vorgesehen, das im wesentlichen konzentrisch über der Abströmöffnung 12 angeordnet ist. Das Loch 16 hat im Normalzustand, der in Figur 1 gezeigt ist, einen deutlich kleineren Querschnitt als die Abströmöffnung 12.

Wirkt bei der Befüllung des Gassacks nur ein geringer Druck auf das Abdeckteil 14, behält dieses seine Form im wesentlichen bei, und es kann nur wenig Gas durch das Loch 16 und anschließend durch die Abströmöffnung 12 austreten.

Figur 2 zeigt einen Zustand, bei dem ein hoher Gassackinnendruck herrscht und das Abdeckteil 14 dementsprechend mit einem hohen Druck beaufschlagt ist. Das Abdeckteil 14 wird an den Rand der Abströmöffnung 12 gepreßt und in die Abströmöffnung 12 hineingedehnt. Aufgrund der Dehnung vergrößert sich das Loch 12 im Abdeckteil 14, so daß eine größere Menge Gas durch die Abströmöffnung 12 entweichen kann.

Mit dem dehnbaren Abdeckteil 14 wird somit erreicht, daß sich der effektive Querschnitt der Abströmöffnung 12 automatisch in Abhängigkeit des Gassackinnendrucks einstellt.

## Patentansprüche

1. Gassackmodul für eine Fahrzeuginsassen-Rückhaltevorrichtung mit einer in einem festen Bauteil (10) des Gassackmoduls gebildeten Abströmöffnung (12), durch die Gas entweichen kann, **dadurch gekennzeichnet, daß** die Abströmöffnung (12) von einem flachen Abdeckteil (14) überdeckt ist, das aus dehnbarem Material besteht und wenigstens ein Loch 16 aufweist.

2. Gassackmodul nach Anspruch 1, **dadurch gekennzeichnet, daß** das Loch (16) einen kleineren Querschnitt als die Abströmöffnung (12) hat.

3. Gassackmodul nach Anspruch 1 oder 2, **dadurch gekennzeichnet, daß** das Loch (16) im wesentlichen konzentrisch über der Abströmöffnung (12) angeordnet ist.

4. Gassackmodul nach einem der vorhergehenden Ansprüche, **dadurch gekennzeichnet, daß** das Abdeckteil (14) im wesentlichen gasdicht am Rand der Abströmöffnung (12) befestigt ist.

5. Gassackmodul nach einem der vorhergehenden Ansprüche, **dadurch gekennzeichnet, daß** das Abdeckteil (14) ein Gewebeteil ist.

6. Gassackmodul nach einem der Ansprüche 1 bis 4, **dadurch gekennzeichnet, daß** das Abdeckteil (14) eine Folie ist.
